(19) Europäisches Patentamt
European Patent Office
Office européen des brevets

(11) **EP 2 049 579 B1**

(12) **EUROPEAN PATENT SPECIFICATION**

(45) Date of publication and mention
of the grant of the patent:
**02.05.2012 Bulletin 2012/18**

(51) Int Cl.:
*C08F 210/08* (2006.01)    *C08F 210/12* (2006.01)
*C08F 210/16* (2006.01)

(21) Application number: **07729246.4**

(22) Date of filing: **17.05.2007**

(86) International application number:
**PCT/EP2007/054798**

(87) International publication number:
**WO 2008/017525 (14.02.2008 Gazette 2008/07)**

(54) **BUTENE-1 COPOLYMERS**

BUTEN-1-COPOLYMERE

COPOLYMÈRES DU BUTÈNE-1

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **08.08.2006 EP 06118601
30.08.2006 US 841286 P**

(43) Date of publication of application:
**22.04.2009 Bulletin 2009/17**

(73) Proprietor: **Basell Poliolefine Italia S.r.l.
20127 Milano (IT)**

(72) Inventors:
• **PELLEGATTI, Giampaolo
I-44030 Boara (IT)**
• **SPATARO, Stefano
I-44100 Ferrara (IT)**
• **PIEMONTESI, Fabrizio
I-44030 Ferrara (IT)**
• **VITALE, Gianni
I-44100 Ferrara (IT)**

(74) Representative: **Gaverini, Gaetano Luigi Attilio
Basell Poliolefine Italia S.r.l.
Intellectual Property
P.le G. Donegani 12
44100 Ferrara (IT)**

(56) References cited:
EP-A1- 0 302 297    WO-A-03/099883
WO-A-2004/048424    GB-A- 1 418 571
GB-A- 1 453 107    US-A- 4 309 522

EP 2 049 579 B1

**Description**

The present invention relates to butene-1 copolymers containing up to 27 % by mole of units derived from ethylene and at least propylene and to a process for the preparation of such butene-1 copolymers.

Butene-1 copolymers are well known in the art and have a wide range of applicability. In particular, butene-1 copolymers with a low content of comonomer (1-3% by mol) are generally characterized by good properties in terms of pressure resistance, creep resistance, impact strength and can be used in the manufacture of pipes for replacing the metal pipes. In addition, butene-1 copolymers with a higher content of comonomer can be used for example as components of blends with other polyolefins or polymeric products, in order to modify particular properties such as scaling strength, flexibility and softness of the plastic materials.

It is known that copolymers of butene-1 with another alpha olefin in blends with crystalline copolymers of propylene act as modifiers improving the heat sealing properties of propylene based films for packaging. Such copolymers when obtained by conventional methods (solution polymerization) generally tend to have narrow molecular weight distribution and thus when added in blends with propylene polymers tend to reduce processability. On the other hand poor random distribution of comonomers in the copolymers obtained with some non conventional processes (gas phase) tend to reduce transparency of the films produced with such copolymers. US patent n. 4943615 discloses butene-1 copolymers containing an alpha olefin comonomer with 2 to 8 carbon atoms. Such copolymers have a molecular weight distribution (MWD) in terms of $\overline{M}w/\overline{M}n$, measured by GPC analysis, of 4 to 1 and a differential scanning calorimetry (DSC) thermal profile characterized by two endothermic peaks. It is laid open the possibility to use not only a single comonomer, but also combination of comonomers in the preparation ofbutene -1copolymers. The US P atent n. 4726999 discloses random butene-1 copolymers with less than 40 % by mole of propylene as comonomer, to be used in blends with a crystalline random propylene copolymer to produce heat sealable layers in laminated structures. The random butene-1 copolymer may further contain small amounts of another alpha olefin comonomer. The above patent documents remain silent on the effect of the addition of a second comonomer and do not provide any example giving indication of referred amounts of the second comonomer to be added. European Patent EP0135358 discloses butene-1 copolymers with propylene as comonomer where the presence of a second comonomer is indicated as possibly detrimental for the overall desired properties of the material if not present in very small amounts.

Extensively amorphous terpolymers of Butene-1 with a content of comonomers over 24% by weight, are known from US patent n. 4309522.

The present invention provides new butene-1 copolymers having an optimal balance of properties making them suitable for various applications and particularly as modifiers to be added to polypropylene crystalline matrices to improve the heat sealing properties of the blends, in particular to lower the seal initiation temperature (SIT) without affecting the processability of the blends so obtained. We have found that this effect is achieved by butene-1 copolymers having a balanced content of up to 27 % by mole of ethylene and one or more alpha-olefin comonomer.

It is therefore an object of the present invention to provide butene-1 copolymers containing:

　　a) from 1 to 7 % by mole, preferably from 1.5 to 5 % by mole, of ethylene derived units, and
　　b) from 3 to 20 % by mole, preferably from 10 to 15 % by mole, of units derived from propylene;

said copolymers having a molecular weight distribution (MWD) with a ratio $\overline{M}w/\overline{M}n$, measured by GPC analysis according to the method specified below, of less than or equal to 4, preferably of less then or equal to 3.7, more preferably of less than or equal to 3.5, and a (b)/(a) molar ratio (wherein (b) and (a) are the above defined alpha-olefin and ethylene derived units) of more than or equal to 2.3, preferably of more than or equal to 2.5.

From the above definition it is evident that the term copolymers is used herein to define polymers containing two or more kinds of comonomers, in particular terpolymers.

Typically the thermal behavior of the copolymers of the present invention is characterized by a broad DSC profile in the temperature range between 70 and 110˚C. The melting points (Tm) of the two crystalline forms of Polybutene-1 are generally distinguishable only with thermal analysis carried out under specific conditions as describe in the experimental section (using 2 heating runs).

Moreover, despite the comonomers content and the very high xilene soluble fraction, that is generally over 60% by weight at 0˚C, preferably over 97% by weight, the copolymers of the present invention exhibit a very high X ray crystallinity that is generally over 33%, preferably over 35%, and flexural elastic modulus of less than 200 MPa, preferably less than or equal to 195. Low values of flexural modulus, are combined with improved tensile properties particularly elongation at break that is equal to or over 400%, preferably equal to or over 450%. Besides, the copolymers of the present invention exhibit values of glass transition temperature below - 10˚C, preferably below -12˚C, which brings better impact properties at low temperature.

The $^{13}$C-NMR spectra for the copolymers of the invention show that the following relation holds:

$$r_B r_Y \le 1$$

$$r_E r_X \le 1.5$$

$$r_P r_Z \le 2$$

Where the products of the reactivity ratios are defined in the description of the examples. In particular referring to the minority comonomers (i.e. ethylene and propylene), the relation $r_B r_Y \le 1$ indicates either very well randomized or almost alternated distribution of both minority comonomers with respect to the main comonomer (butene-1).

The copolymers of the present invention act as modifiers when blended in polymeric compositions particularly lowering the seal initiation temperature without lowering the melting temperature of the polymeric matrix and without reducing the overall processability of the composition. This is typically a requirement for the seal layers of films for packaging. The copolymers of the present invention have proved to be particularly advantageous both in bioriented film (particularly bioriented polypropylene film BOPP) and cast film applications and also in blown films.

Particularly the copolymers of the present invention, when blended in polymer matrices give soft materials without affecting or sometimes even improving other mechanical properties of the blends. High impact resistance is found at low temperature due to the glass transition behavior of the copolymers of the present invention.

Therefore, a further object of the present invention is a polymer composition comprising:

(A) from 1 to 99% by weight, preferably from 5 to 40% by weight, of a butene-1 copolymer according to the present invention, and
(B) from 99% to 1% by weight, preferably from 60 to 95% by weight, of another polymeric component;

said percentages being based on the sum of (A)+(B).

Preferably the component (B) comprises an olefin (co)polymer. In particular the component (B) can be selected from ethylene containing (co)polymers, propylene containing (co)polymers and from their mixtures.

Particularly interesting are the polymer compositions comprising:

(A) from 1 to 99% by weight, preferably from 5 to 40% by weight, of the butene-1 copolymers of the present invention; and
(B) from 99% to 1% by weight, preferably from 60 to 95% by weight, of a propylene homopolymer or copolymer containing from 1 to 30 % by mol of ethylene and/or an alpha-olefin of formula $CH_2=CHR$, where R is a $C_2$-$C_{10}$ hydrocarbon goup; said percentages being based on the sum of (A)+(B).

Preferably, said alpha-olefin is butene-1. Particularly interesting are the compositions in which (B) is selected from (a) a propylene copolymer containing both ethylene and butene-1 wherein the content of ethylene is from 1 to 10% and the content of butene-1 is from 1 to 10% and (b) a propylene copolymer containing from 2 to 15% by mol of butene-1.

Said compositions, which are particularly useful in applications where a low seal initiation temperature (SIT) is required, show better performances, in terms of SIT and mechanical properties, with respect to the compositions in which butene-1 copolymers of the prior art are used.

Preferred for the use in bioriented film application are butene-1 copolymers, according to the invention, having flexural elastic modulus of less than or equal to 120 MPa. Particularly preferred for this application are the copolymers having an ethylene content of from 2.9 to 7 % by mole, preferably from 2.9 to 5 % by mole, wherein propylene is present in amounts from 7 to 18 % by mole.

Preferred for the use in cast or blown film application are butene-1 copolymers, according to the present invention, having flexural elastic modulus of from 120 to 195 MPa. Particularly preferred for this last application are the copolymers having an ethylene content of from 1 to 2.9 % by mole, preferably from 1.5 to 2 % by mole, wherein propylene is present in amounts from 7 to 15 % by mole.

In the above applications the variation in the content of propylene is less influencing the mechanical and tensile properties, particularly the flexural modulus, than the content of ethylene.

The copolymers of the invention can be used also in the preparation of polymer compositions to be used in applications requiring a specific range of peel force between two layers that have been previously sealed (Seal-Peel applications).

The butene-1 copolymers of the present invention can be prepared by polymerization of the monomers in the presence of a stereospecific Ziegler-Natta catalyst. The process comprises copolymerizing butene-1 with:

a) from 1 to 7 % by mole, preferably from 1.5 to 5 % by mole, of ethylene, and
b) from 3 to 20 % by mole, preferably from 10 to 15 % by mole, of propylene;

in the presence of a stereospecific Ziegler-Natta catalyst catalyst comprising (A) a solid component comprising a Ti compound and an internal electron-donor compound supported on $MgCl_2$; (B) an alkylaluminum compound and, optionally, (C) an external electron-donor compound.

Magnesium dichloride in active form is preferably used as a support. It is widely known from the patent literature that magnesium dichloride in active form is particularly suited as a support for Ziegler-Natta catalysts. In particular, USP 4,298,718 and USP 4,495,338 were the first to describe the use of these compounds in. Ziegler-Natta catalysis. It is known from these patents that the magnesium dihalides in active form used as support or co-support in components of catalysts for the polymerisation of olefins are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds used in the catalyst component of the present invention are $TiCl_4$ and $TiCl_3$; furthermore, also Ti-haloalcoholates of formula $Ti(OR)_{n-y}X_y$, where n is the valence of titanium, X is halogen, preferably chlorine, and y is a number between 1 and n, can be used.

The internal electron-donor compound is preferably selected from esters and more preferably from alkyl, cycloalkyl or aryl esters of monocarboxylic acids, for example benzoic acids, or polycarboxylic acids, for example phthalic or succinic acids, the said alkyl, cycloalkyl or aryl groups having from 1 to 18 carbon atoms. Examples of the said electron-donor compounds are diisobutyl phthalate, diethylphtahalate and dihexylphthalate. Generally, the internal electron donor compound is used in molar ratio with respect to the $MgCl_2$ of from 0.01 to 1 preferably from 0.05 to 0.5.

The preparation of the solid catalyst component can be carried out according to several methods.

According to one of these methods, the magnesium dichloride in an anhydrous state and the internal electron donor compound are milled together under conditions in which activation of the magnesium dichloride occurs. The so obtained product can be treated one or more times with an excess of $TiCl_4$ at a temperature between 80 and 135°C. This treatment is followed by washings with hydrocarbon solvents until chloride ions disappeared. According to a further method, the product obtained by co-milling the magnesium chloride in an anhydrous state, the titanium compound and the internal electron donor compound is treated with halogenated hydrocarbons such as 1,2-dichloroethane, chlorobenzene, dichloromethane etc. The treatment is carried out for a time between 1 and 4 hours and at temperature of from 40°C to the boiling point of the halogenated hydrocarbon. The product obtained is then generally washed with inert hydrocarbon solvents such as hexane.

According to another method, magnesium dichloride is pre-activated according to well known methods and then treated with an excess of $TiCl_4$ at a temperature of about 80 to 135°C which contains, in solution, an internal electron donor compound. The treatment with $TiCl_4$ is repeated and the solid is washed with hexane in order to eliminate any non-reacted $TiCl_4$.

A further method comprises the reaction between magnesium alcoholates or chloroalcoholates (in particular chloroalcoholates prepared according to U.S. 4,220,554) and an excess of $TiCl_4$ comprising the internal electron donor compound in solution at a temperature of about 80 to 120°C.

According to a preferred method, the solid catalyst component can be prepared by reacting a titanium compound of formula $Ti(OR)_{n-y}X_y$, where n is the valence of titanium and y is a number between 1 and n, preferably $TiCl_4$, with a magnesium chloride deriving from an adduct of formula $MgCl_2 \cdot pROH$, where p is a number between 0,1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Examples of spherical adducts prepared according to this procedure are described in USP 4,399,054 and USP 4,469,648. The so obtained adduct can be directly reacted with the Ti compound or it can be previously subjected to thermal controlled dealcoholation (80-130°C) so as to obtain an adduct in which the number of moles of alcohol is generally lower than 3 preferably between 0,1 and 2,5. The reaction with the Ti compound can be carried out by suspending the adduct (dealcoholated or as such) in cold $TiCl_4$ (generally 0°C); the mixture is heated up to 80-130°C and kept at this temperature for 0,5-2 hours. The treatment with $TiCl_4$ can be carried out one or more times. The internal electron donor compound can be added during the treatment with $TiCl_4$. The treatment with the electron donor compound can be repeated one or more times. The preparation of catalyst components in spherical form is described for example in European Patent Applications EP-A-395083, EP-A-553805, EP-A-553806, EPA-601525 and WO98/44001.

The solid catalyst components obtained according to the above method show a surface area (by B.E.T. method) generally between 20 and 500 $m^2/g$ and preferably between 50 and 400 $m^2/g$, and a total porosity (by B.E.T. method) higher than 0,2 cm³/g preferably between 0,2 and 0,6 cm³/g. The porosity (Hg method) due to pores with radius up to 10.000Å generally ranges from 0.3 to 1.5 cm³/g, preferably from 0.45 to 1 cm³/g.

The alkyl-Al compound (B) is preferably chosen among the trialkyl aluminum compounds such as for example triethylaluminum, triisobutylaluminum, tri-n-butylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as $AlEt_2Cl$ and $Al_2Et_3Cl_3$.

The external donors (C) are preferably selected among silicon compounds of formula $R_a^5R_b^6Si(OR^7)_c$, where a and b are integer from 0 to 2, c is an integer from 1 to 3 and the sum (a+b+c) is 4; $R^5$, $R^6$, and $R^7$, are alkyl, cycloalkyl or aryl radicals with 1-18 carbon atoms optionally containing heteroatoms. A particularly preferred group of silicon compounds is that in which a is 0, c is 3, b is 1 and $R^6$ is a branched alkyl or cycloalkyl group, optionally containing heteroatoms, and $R^7$ is methyl. Examples of such preferred silicon compounds are dicyclopentyldimethoxysilane, cyclohexyltrimethoxysilane, t-butyltrimethoxysilane and thexyltrimethoxysilane. The use of dicyclopentyldimethoxysilane is particularly preferred.

The electron donor compound (C) is used in such an amount to give a molar ratio between the organoaluminum compound and said electron donor compound (c) of from 0.1 to 500, preferably from 1 to 300 and more preferably from 3 to 100.

In order to make the catalyst particularly suitable for the polymerization step, it is possible to pre-polymerize said catalyst in a pre-polymerization step. Said prepolymerization can be carried out in liquid, (slurry or solution) or in the gas-phase, at temperatures generally lower than 100˚C, preferably between 20 and 70˚C. The pre-polymerization step is carried out with small quantities of monomers for the time which is necessary to obtain the polymer in amounts of between 0.5 and 2000g per g of solid catalyst component, preferably between 5 and 500 and, more preferably, between 10 and 100g per g of solid catalyst component.

The polymerization process can be carried out according to known techniques, for example slurry polymerization using as diluent a liquid inert hydrocarbon, or solution polymerization using for example the liquid butene-1 as a reaction medium. Moreover, it may also be possible to carry out the polymerization process in the gas-phase, operating in one or more fluidized or mechanically agitated bed reactors. The polymerization carried out in the liquid butene-1 as a reaction medium is highly preferred

The polymerization is generally carried out at temperature of from 20 to 120˚C, preferably of from 40 to 90˚C. The polymerization can be carried out in one or more reactors that can work under same or different reaction conditions such as concentration of molecular weight regulator, comonomer concentration, temperature, pressure etc. Working in more than one reactor under different conditions has the advantage that the various polymerization step can be properly modulated so as to properly tailoring the properties of the final polymer.

As mentioned above, the copolymers of the invention are suitable for use in many applications and particularly for cast and bioriented films, bioriented polypropilene films (BOPP) and also for blown films.

As a customary routine, for each of these applications the relevant experts can add further polymer components, additives (such as stabilizers, antioxidants, anticorrosives, nucleating agents, processing aids, etc.) and both organic and inorganic fillers which can impart specific properties, without departing from the gist of the invention.

The following examples are given in order to better illustrate the invention without limiting it.

## CHARACTERIZATION

### Comonomer content

$^{13}$C-NMR spectra of the copolymers of the examples were performed on a polymer solution (8-12 % by weight) in dideuterated 1,1,2,2-tetrachloro-ethane at 120 ˚C. The $^{13}$C NMR spectra were acquired on a Bruker DPX-400 spectrometer operating at 100.61 MHz in the Fourier transform mode at 120 ˚C using a 90˚ pulse, 15 seconds of delay between pulses and CPD (WALTZ16) to remove $^1$H-$^{13}$C coupling. About 1000 transients were stored in 32K data points using a spectral window of 60 ppm (0-60 ppm).

*Copolymer Composition*

Diad distribution is calculated from $^{13}$C NMR spectra using the following relations:

$$PP = 100\, I_1/\Sigma$$

$$PB = 100 \, I_2/\Sigma$$

$$BB = 100 \, (I_3 - I_{19})/\Sigma$$

$$PE = 100 \, (I_5 + I_6)/\Sigma$$

$$BE = 100 \, (I_9 + I_{10})/\Sigma$$

$$EE = 100 \, (0.5(I_{15} + I_6 + I_{10}) + 0.25 \, (I_{14}))/\Sigma$$

Where $\Sigma = I_1 + I_2 + I_3 - I_{19} + I_5 + I_6 + I_9 + I_{10} + 0.5(I_{15} + I_6 + I_{10}) + 0.25 \, (I_{14})$ The molar content is obtained from diads using the following relations:

$$P \, (m\%) = PP + 0.5 \, (PE+PB)$$

$$B \, (m\%) = BB + 0.5 \, (BE+PB)$$

$$E \, (m\%) = EE + 0.5 \, (PE+BE)$$

$I_1, I_2, I_3, I_5, I_6, I_9, I_6, I_{10}, I_{14}, I_{15}, I_{19}$ are integrals of the peaks in the $^{13}$C NMR spectrum (peak of EEE sequence at 29.9 ppm as reference). The assignments of these peaks are made according to J.C. Randal, Macromol. Chem Phys., C29, 201 (1989), M. Kakugo, Y. Naito, K. Mizunuma and T. Miyatake, Macromolecules, 15, 1150, (1982), and H.N. Cheng, Journal of Polymer Science, Polymer Physics Edition, 21, 57 (1983). They are collected in Table A (nomenclature according to C.J. Carman, R.A. Harrington and C.E. Wilkes, Macromolecules, 10, 536 (1977)).

**Table A.**

| I | Chemical Shift (ppm) | Carbon | Sequence |
|---|---|---|---|
| 1 | 47.34-45.60 | $S_{\alpha\alpha}$ | PP |
| 2 | 44.07-42.15 | $S_{\alpha\alpha}$ | PB |
| 3 | 40.10-39.12 | $S_{\alpha\alpha}$ | BB |
| 4 | 39.59 | $T_{\delta\delta}$ | EBE |
| 5 | 38.66-37.66 | $S_{\alpha\gamma}$ | PEP |
| 6 | 37.66-37.32 | $S_{\alpha\delta}$ | PEE |
| 7 | 37.24 | $T_{\beta\delta}$ | BBE |
| 8 | 35.22-34.85 | $T_{\beta\beta}$ | X<u>B</u>X |
| 9 | 34.85-34.49 | $S_{\alpha\gamma}$ | B<u>B</u>E |
| 10 | 34.49-34.00 | $S_{\alpha\delta}$ | <u>B</u>EE |
| 11 | 33.17 | $T_{\delta\delta}$ | E<u>P</u>E |
| 12 | 30.91-30.82 | $T_{\beta\delta}$ | X<u>P</u>E |
| 13 | 30.78-30.62 | $S_{\gamma\gamma}$ | X<u>EE</u>X |
| 14 | 30.52-30.14 | $S_{\gamma\delta}$ | X<u>E</u>EE |

(continued)

| I | Chemical Shift (ppm) | Carbon | Sequence |
|---|---|---|---|
| 15 | 29.87 | $S_{\delta\delta}$ | EEE |
| 16 | 28.76 | $T_{\beta\beta}$ | XPX |
| 17 | 28.28-27.54 | $2B_2$ | XBX |
| 18 | 27.54-26.81 | $S_{\beta\delta}+2B_2$ | BE, PE, BBE |
| 19 | 26.67 | $2B_2$ | EBE |
| 20 | 24.64-24.14 | $S_{\beta\beta}$ | XEX |
| 21 | 21.80-19.50 | $CH_3$ | P |
| 22 | 11.01-10.79 | $CH_3$ | B |

## Comonomer distribution

The comonomer distribution in the terpolymers was determined using the product of reactivity ratios. Due to the presence of 3 comonomers, 3 different product of reactivity ratios $r_a r_b$ were evaluated for each comonomer with respect to the other two, by using a modification of the Kakugo's formulae (M. Kakugo, Y. Naito, K. Mizunuma and T. Miyatake, Macromolecules, 15, 1150, (1982)):

$$1.\ r_E r_X = 4\ XX\ EE\ /\ (XE)^2$$
$$\text{where } XX = BB + PP + BP,\ XE = PE + BE \text{ and } EE = EE$$

$$2.\ r_B r_Y = 4\ YY\ BB\ /\ (BY)^2$$
$$\text{where } YY = PP + EE + PE,\ BY = BE + BP,\ BB = BB$$

$$3.\ r_P r_Z = 4\ ZZ\ PP\ /\ (PZ)^2$$
$$\text{where } ZZ = BB + EE + BE,\ PZ = PE + BP,\ PP = PP$$

The values of the combined diad distributions (EE, BB, PP, XX, YY, ZZ, XE, YE, ZE) and of the product of reactivity ratios were calculated from $^{13}$C NMR spectra.

## Determination of the Melt Flow Rate (MFR)

Measured according to the method ISO 1133

## Density

Measured according to the method ISO 1183 is based on observing the level to which a test specimen sinks in a liquid column exhibiting a density gradient.

Standard specimen are cut from strands extruded from a grader (MFR measurement). The specimen is putted in an autoclave at 2000 bar for 10min at a room temperature in order to accelerate the transformation phase of the polybutene. After this the specimen is inserted in the gradient column where density is measured according to ISO 1183.

## Determination of Polydispersity Index (PI).

This property is strictly connected with the molecular weight distribution of the polymer under examination. In particular it is inversely proportional to the creep resistance of the polymer in the molten state. Said resistance called modulus separation at low modulus value (500 Pa), was determined at a temperature of 200˚C by using a parallel plates rheometer model RMS-800 marketed by RHEOMETRICS (USA), operating at an oscillation frequency which increases from 0.1 rad/sec to 100 rad/second. From the modulus separation value, one can derive the P.I. by way of the equation:

P.I:= 54.6*(modulus separation)$^{-1.76}$

in which the modulus separation is defined as:

modulus separation = frequency at G'=500Pa / frequency at G"=500Pa

wherein G' is storage modulus and G" is the loss modulus.

## MWD and $\overline{M}$w/$\overline{M}$n determination by Gel Permeation Chromatoeraphy(GPC)

MWD and particularly the ratio $\overline{M_w}/\overline{M_n}$ is determined using a Waters 150-C ALC/GPC system equipped with a TSK column set (type GMHXL-HT) working at 135˚C with 1,2-dichlorobenzene as solvent (ODCB) (stabilized with 0.1 vol. of 2, 6-di-t-butyl p-cresole (BHT) ) at flow rate of 1 ml/min. The sample is dissolved in ODCB by stirring continuously at a temperature of 140˚C for 1 hour.
The solution is filtered through a 0.45 $\mu$m Teflon membrane. The filtrate (concentration 0.08-1.2g/l injection volume 300 $\mu$l) is subjected to GPC. Monodisperse fractions of polystyrene (provided by Polymer Laboratories) were used as standard. The universal calibration for PB copolymers was performed by using a linear combination of the Mark-Houwink constants for PS (K=7.11x10-5dl/g; a=0. 743) and PB(K=1.18x10-4dl/g; $\alpha$=0.725).

## Determination of X-ray crystallinity

The X-ray crystallinity was measured with an X-ray Diffraction Powder Diffractometer using the Cu-K$\alpha$1 radiation with fixed slits and collecting spectra between diffraction angle 2$\Theta$ = 5˚ and 2$\Theta$ = 35˚ with step of 0.1 ˚ every 6 seconds.
Measurement were performed on compression molded specimens in the form of disks of about 1.5-2.5 mm of thickness and 2.5-4.0 cm of diameter. These specimens are obtained in a compression molding press at a temperature of 200˚C $\pm$ 5˚C without any appreciable applied pressure for 10 minutes. Then applying a pressure of about 10Kg/cm$^2$ for about few second and repeating this last operation for 3 times.
The diffraction pattern was used to derive all the components necessary for the degree of cristallinity by defining a suitable linear baseline for the whole spectrum and calculating the total area (Ta), expressed in counts/sec·2$\Theta$, between the spectrum profile and the baseline;
Then a suitable amorphous profile was defined, along the whole spectrum, that separate, according to the two phase model, the amorphous regions from the crystalline ones. Thus it is possible to calculate the amorphous area (Aa), expressed in counts/sec·2$\Theta$, as the area between the amorphous profile and the baseline; and the cristalline area (Ca), expressed in counts/sec·2$\Theta$, as Ca = Ta- Aa
The degree of cristallinity of the sample was then calculated according to the formula:

$$\%Cr = 100 \times Ca / Ta$$

## Determination of the melting points.

The melting points (Tm) of the polymers of the examples were measured by Differential Scanning Calorimetry (D.S.C.) on a Perkin Elmer DSC-1 calorimeter, previously calibrated against indium and zinc melting points. The weight of the samples in every DSC crucible was kept at 6.0 = 0.5 mg.
For the copolymers of the invention the two different crystalline forms of polybutene (i.e. Form I and Form II) are distinguishable, in a DSC melting thermogram, because they have distinct melting points: Form I melts always at higher temperature than Form II. Moreover, Form II precipitates during the crystallization from the melt while the more stable Form I forms upon annealing at room temperature for a certain amount of time.
The data acquisition in continuous heating mode has been carried out as follows:

a) The weighted sample was sealed into aluminum pans and heated to 180˚C at 10˚C/minute. The sample was kept at 180˚C for 5 minutes to allow a complete melting of all the crystallites, then cooled to -20˚C at 10˚C/minute. After standing 2 minutes at -20˚C, the sample was heated for the second time to 180˚C at 10˚C/min. In this second heating run, the peak temperature was taken as the melting temperature of Form II (Tm II) and the area of the peak as its melting enthalpy ($\Delta$Hf).

b) annealing of the samples at room temperature for different length of time (from a few hours up to several days);
c) heating up scan from room temperature to 180˚C with heating rate of 10˚C/min to obtain the thermograms necessary to measure the evolution of the Form II → Form I solid-solid transformation, thus measuring the melting temperature of Form I (Tm I).

### Tg determination via DMTA analysis

Molded specimen of 76mm by 13mm by 1 mm are fixed to the DMTA machine for tensile stress. The frequency of the tension and relies of the sample is fixed at 1 Hz. The DMTA translate the elastic response of the specimen starting form -100˚C to 130˚C. In this way it is possible to plot the elastic response versus temperature. The elastic modulus for a viscoelastic material is defined as E=E'+iE". The DMTA can split the two components E' and E" by their resonance and plot E' vs temperature and E'/E" = tan (δ) vs temperature.

The glass transition temperature Tg is assumed to be the temperature at the maximum of the curve E'/E" = tan (δ) vs temperature.

### Tensile Properties

Measured according to ISO8986-2 using a specimen type ASTM-D638 on a 1.9 mm thick plaque obtained by compression molding (at 200˚C with an cooling of 30˚C/min) of a polymer composition obtained by mixing in a Brabender the relevant copolymer sample with 1% 2,6- di-t-butyl-4-methyl phenol (BHT) at 180˚C.

Before testing, 1,9 mm thick plaques are put into an autoclave at 200 bars for 10 min at room temperature in order to accelerate the phase transformation of PB.

### Seal initiation temperature (SIT) of the compositions.

Determined by preparing 50 $\mu$m-thick films by extruding the polymeric compositions at about 200˚C. Each film thus obtained is laid over a plaque of polypropylene having a xylene-soluble of 4% by weight, melt flow rate of 2 g/10 min. The overlapped film and plaque are bonded in a plate-press at 200˚C with a load of 9000 kg. The said load is maintained for 5 minutes. The resulting bonded test pieces are then stretched seven times their length and width using a TM LONG film stretcher, thus obtaining films of a thickness of about 20 $\mu$m. 20x50 mm specimens are obtained from the said films. The sealing values are obtained by applying a 2 N load to heat-sealed samples. For each measurement two of the above specimens are overlapped with the heat-sealable layers, made up of the compositions of the examples, touching each other. The said overlapped specimens are then sealed along the 20 mm side using a Xentinel combination laboratory sealer model 12-12 AS. The sealing time is 5 seconds, the pressure about 0.13 MPa (1.3 atm) and the width of the seals 20 mm. The sealing temperature is increased by 2˚C for each sample to be measured. The unsealed ends are attached to a dynamometer, and the minimum seal temperature where the seal does not break when a 2N load is applied is determined. This temperature represents the seal initiation temperature.

### EXAMPLES

### Preparation of Solid Catalyst Component

Into a 500 ml four-necked round flask, purged with nitrogen, 225 ml of TiCl$_4$ were introduced at 0˚C. While stirring, 6.8 g of microspheroidal MgCl$_2$•2.7C$_2$H$_5$OH (prepared as described in Ex. 2 of USP 4,399,054 but operating at 3,000 rpm instead of 10,000) were added. The flask was heated to 40˚C and 4.4 mmoles of diisobutylphthalate were thereupon added. The temperature was raised to 100˚C and maintained for two hours, then stirring was discontinued, the solid product was allowed to settle and the supernatant liquid was siphoned off.

200 ml of fresh TiCl$_4$ were added, the mixture was reacted at 120˚C for one hour then the supernatant liquid was siphoned off and the solid obtained was washed six times with anhydrous hexane (6 x 100 ml) at 60˚C and then dried under vacuum. The catalyst component contained 2.8 % by weight of Ti and 12.3 % by weight of phthalate.

### Examples 1-5 Preparation of butene-1/propylene/ethylene copolymers

The polymerisation was carried out in examples 1-4 after a precontacting step, in a liquid-phase stirred reactor (R1) in which liquid butene-1 constituted the liquid medium. During the precontacting step the solid catalyst component, the Al-Alkyl compound TIBAL (i.e. triisobutylaluminum) and the external donor dicyclopentyldimethoxysilane were pre-mixed under the conditions reported in table 1. The catalyst system was then injected into the reactor working under the conditions reported in the same table 1.

The polymerization was stopped after 8 Hrs by killing the catalyst and transferring the polymerized mass in the devolatilization step.

In example 5 the polymerisation was a sequential polymerization carried out after a precontacting step, in two liquid-phase stirred reactors (R1, R2) connected in series in which liquid butene-1 constituted the liquid medium. The catalyst system was injected into the first reactor working under the conditions reported in table 1.

After the first polymerization step the content of the first reactor was transferred into the second reactor where the polymerization continued under the conditions reported in the same table 1.

The polymerization was stopped, as in examples 1-4, by killing the catalyst and transferring the polymerized mass in the devolatilization step.

A detailed description of the process is found in the International Patent Application WO04/000895.

The comonomer distribution was evaluated from the product of reactivity ratios calculated according to the method described above.

The values of the combined diad distributions (EE, BB, PP, XX, YY, ZZ, XE, YE, ZE) and of the product of reactivity ratios are reported in table 1b for the polymers of examples 1-4.

The other results of the characterization carried out on the obtained copolymer s are reported in Table 2.

Comparative Example 6 (6C): Preparation of butene-1/ethylene copolymers

Polybutene-1 DP 8220M a random copolymer of butene-1 with ethylene produced by Basell Polyolefins (MFR 2.5 g/10 min at 190˚C/2.16kg, flexural modulus 140 MPa) was tested as a modifier for comparison.

The characterization of the copolymer is reported in Table 2.

Comparative Example7 (7C): butene-1/propylene copolymers

The commercial product Tafmer BL2481, produced by Mitsui Chemicals Inc., was characterized and tested as a modifier for comparison. The characterization of the copolymer is reported in Table 2.

Comparing example 7C with examples 4 and 5 it is found that Impact behaviour at low temperature of the copolymers of the present invention is better (lower values of Tg are found), without depressing the flexural modulus and without substantially affecting the other tensile properties.

Seal Initiation Temperature (SIT) tests

A mechanical blend comprising

- 20%bw of the butene-1 copolymers of examples 1-5 and comparative examples 6-7 and
- 80% of an isotactic terpolymer matrix having a SIT (Seal Initiation Temperature) of 105˚C and a melting temperature of 132˚C, containing 3.2% by weight of ethylene, 6%by weight of butene-1 and 90.8% by weight of propylene was prepared.

A BOPP film was obtained from the above blend-composition with a stretching ratio of 7x7 using a TM LONG film stretcher as above described. Then the test for the determination of the SIT was carried out by sealing at various temperatures and testing the seal strength using a standard Instron tensile machine. The SIT is taken as the temperature at a seal strength of 2 N/2 cm. The results are reported in Table 2.

**Table 1**

| EXAMPLES | 1 | 2 | 3 | 4 | 5 | |
|---|---|---|---|---|---|---|
| PRECONTACTING | | | | | | |
| temperature ˚C | 10 | 10 | 10 | 10 | 10 | |
| catalyst g/h | 0.45 | 0.55 | 0.40 | 1.2 | 0.8 | |
| Al-Alkyl / donor g/g | 185 | 160 | 125 | 135 | 160 | |
| POLYMERIZATION | | | | | | |
| | R1 | R1 | R1 | R1 | R1 | R2 |
| temperature ˚C | 75 | 75 | 75 | 75 | 80 | 75 |

(continued)

| EXAMPLES | 1 | 2 | 3 | 4 | 5 | |
|---|---|---|---|---|---|---|
| C4- reactor feed Kg/h | 114 | 102 | 108 | 100 | 110 | 50 |
| C3- reactor feed Kg/h | 6.5 | 5.7 | | 6.1 | 2.6 | 1.9 |
| C2- reactor feed Kg/h | 0.56 | 0.36 | 0.55 | 0.59 | 0.74 | 0.32 |
| $H_2$ reactor feed g/h | 3.7 | 3.4 | 2.8 | 1.9 | 4.1 | 2.0 |
| split %wt | 100 | 100 | 100 | 100 | 68 | 32 |
| yield (density) kg/g | 630000 | 59000 | 73000 | 24000 | 56000 | |

**Table 1b**

| Composition and Comonomer distribution via Nmr | | | | | | |
|---|---|---|---|---|---|---|
| EXAMPLES | | | 1 | 2 | 3 | 4 |
| B - Butene | %mol | | 84.2 | 83.9 | 85.9 | 86.5 |
| E - Etylene -units deriv. (a) | %mol | | 3.2 | 3.2 | 4.4 | 1.5 |
| P - Propylene - units deriv. (b) | %mol | | 12.6 | 12.9 | 10.7 | 12.0 |
| Propylene/Etilene - (b)/(a) | molar ratio | | 3.9 | 4.0 | 2.5 | 8.0 |
| Etylene | %wt | | 1.7 | 1.7 | 2.3 | 0.8 |
| Propylene | %wt | | 10 | 10.2 | 8.5 | 9.4 |
| Propylene/Etylene | wt ratio | | 5.9 | 6.0 | 3.7 | 11.75 |
| BB | | | 0.7111 | 0.7066 | 0.7260 | 0.7547 |
| BP | | | 0.2077 | 0.2113 | 0.1756 | 0.2001 |
| PP | | | 0.0193 | 0.0198 | 0.0168 | 0.0166 |
| BE | | | 0.0619 | 0.0624 | 0.0794 | 0.0287 |
| PE | | | 0.0000 | 0.0000 | 0.0000 | 0.0000 |
| EE | | | 0.0000 | 0.0000 | 0.0022 | 0.0000 |
| XX | | | 0.9381 | 0.9377 | 0.9184 | 0.9714 |
| XE | | | 0.0619 | 0.0624 | 0.0794 | 0.0287 |
| X=B+P | | | | | | |
| $r_B r_Y$ | | | 0.0000 | 0.0000 | 1.2820 | 0.0000 |
| BY | | | 0.2696 | 0.2737 | 0.2550 | 0.2288 |
| YY | | | 0.0193 | 0.0198 | 0.0190 | 0.0166 |
| Y=E+P | | | | | | |
| $r_B r_Y$ | | | 0.7553 | 0.7470 | 0.8485 | 0.9573 |
| PZ | | | 0.2077 | 0.2113 | 0.1756 | 0.2001 |
| ZZ | | | 0.7730 | 0.7690 | 0.8076 | 0.7834 |
| Z=E+B | | | | | | |
| $r_P r_Z$ | | | 1.3833 | 1.3641 | 1.7600 | 1.2991 |

**Table 2**

| EXAMPLES | | 1 | 2 | 3 | 4 | 5 | 6c | 7c |
|---|---|---|---|---|---|---|---|---|
| MFR 2.16Kg 190˚C | g/10min | 0.91 | 2.4 | 2.5 | 2.5 | 2.6 | 2.5 | 4.1 |
| PI | | 4.1 | 4 | 4.4 | 4 | 4.3 | 4.7 | 4.9 |
| $\overline{M}w/\overline{M}n$ | | 3.4 | 3.4 | 3.4 | 3.1 | 3.1 | 3.5 | 4.5 |
| RX cristallinity | | 35 | 35 | 33 | 38 | 40 | 41 | 33 |
| E -Etylene - units deriv. (a) | %mol | 3.2 | 3.2 | 4.4 | 1.5 | 1.9 | 4.7 | - |
| P - Propylene - units deriv. (b) | %mol | 12.6 | 12.9 | 10.7 | 12.0 | 11.7 | - | 25.5 |
| Propylene/Etilene - (b)/(a) | molar ratio | 3.9 | 4.0 | 2.5 | 8.0 | 6.2 | - | - |
| Etylene NMR | %wt | 1.7 | 1.7 | 2.3 | 0.8 | 1.0 | 2.4 | - |
| Propylene NMR | %wt | 10 | 10.2 | 8.5 | 9.4 | 9.1 | - | 20.4 |
| Propylene/Etylene | wt ratio | 5.9 | 6.0 | 3.7 | 11.5 | 9.1 | - | - |
| Density | Kg/dm$^3$ | 0.892 | 0.892 | 0.892 | 0.899 | 0.900 | 0.901 | 0.887 |
| DSC Tm (I) BTM | ˚C | 96 | 96 | 92.8 | 102 | 99.3 | 100 | 73.7 |
| DSC Tm (II) BTM | ˚C | 73 | 76 | 76.4 | n.d.* | 87.5 | 89 | 75 |
| Tg (DMTA) | ˚C | -14 | -14 | -20 | -12 | -18 | -16 | -9 |
| Flexural Modulus | MPa | 117 | 117 | 102 | 187 | 195 | 154 | 200 |
| Strength at Yield | MPa | - | 7.3 | 6.2 | 10.2 | 11.0 | - | 10 |
| Elongation at Yield | % | - | 31.2 | 23.7 | 31.2 | 30.8 | - | - |
| Strength at Break | MPa | 31.2 | 32.8 | 32.7 | 37.3 | 37.7 | 36 | 41 |
| Elongation at Break | % | 453 | 457 | 520 | 446 | 456 | 420 | 450 |
| SIT test on blends (20%wt in a polymer matrix**) | | | | | | | | |
| Seal Initiation Temperature | | 83 | 85 | 83 | 82 | 85 | 92 | 85 |
| * Tm (II) is not distinguishable (n.d.) even with thermal analysis<br>** see description of the SIT tests | | | | | | | | |

**Claims**

1.  Butene-1 copolymers containing:

    a) from 1 to 7 % by mole of ethylene derived units, and
    b) from 3 to 20 % by mole of units derived from propylene;
    said copolymers having a molecular weight distribution with a ratio $\overline{M}w/\overline{M}n$ of less than or equal to 4 and a (b)
    /(a) molar ratio of more than or equal to 2.3 **and having**:

$$r_B r_Y \leq 1$$

$$r_E r_X \leq 1.5$$

$$r_P r_Z \leq 2;$$

    $r_B r_Y$, $r_E r_X$ and $r_P r_Z$ **being the products of the reactivity ratios in the 13C-NMR spectra at 100.61 MHz, in dideuterated 1,1,2,2-tetrachloro-ethane at 120 ˚C.**

2. The butene-1 copolymers according to claim 1 having X ray crystallinity over 33% and flexural elastic modulus of less than 200 MPa.

3. A polymer composition comprising

   (A) from 1 to 99 % by weight of a butene-1 copolymer according to claim 1, and
   (B) from 99% to 1% by weight of another polymeric component;
   the said percentages being referred to the sum of (A) and (B).

4. A polymer composition according to claim 3 in which the component (B) comprises an olefin (co)polymer.

5. A polymer composition according to claim 3 in which the component (B) is a ethylene containing (co)polymer, a propylene containing (co)polymer or their mixtures.

6. Manufactured articles obtained from the butene-1 copolymers or compositions according to any of the preceding claims.

7. Process for the preparation of the butene-1 copolymers of claim 1 or 2 comprising copolymerizing butene-1 with:

   a) from 1 to 7 % by mole of ethylene, and
   b) from 3 to 20 % by mole of
   propylene;
   in the presence of a stereospecific Ziegler-Natta catalyst comprising (A) a solid catalyst component comprising a Ti compound and an electron-donor compound selected from phthalates, supported on $MgCl_2$; (B) an alkylaluminum compound and, (C) an external electron-donor compound of formula $R_a^5 R_b^6 Si(OR^7)_c$, where a and b are integer from 0 to 2, c is an integer from 1 to 3 and the sum (a+b+c) is 4; $R^5$, $R^6$, and $R^7$, are alkyl, cycloalkyl or aryl radicals with 1-18 carbon atoms optionally containing heteroatoms.

8. The process according to claim 7 wherein the external donor is dicyclopentyldimethoxysilane.

9. Process according to claim 7 or 8 carried out in liquid butene-1.

**Patentansprüche**

1. Buten-1-Copolymere, enthaltend:

   a) von 1 bis 7 Mol-% von Ethylen abgeleitete Einheiten, und
   b) von 3 bis 20 Mol-% von Propylen abgeleitete Einheiten;
   wobei die Copolymere eine Molekulargewichtsverteilung mit einem Verhältnis von $\overline{M}w / \overline{M}n$ von weniger als oder gleich 4 und ein Molverhältnis von (b)/(a) von mehr als oder gleich 2,3 und

$$r_B r_Y \leq 1$$

$$r_E r_X \leq 1,5$$

$$r_P r_Z \leq 2$$

aufweisen; wobei $r_B r_Y$, $r_E r_X$ und $r_P r_Z$ die Produkte der Reaktivitätsverhältnisse in den $^{13}$C-NMR-Spektren bei 100,61 MHz, in dideuteriertem 1,1,2,2-Tetrachlorethan bei 120 °C sind.

2. Buten-1-Copolymere nach Anspruch 1, die eine Röntgenkristallinität über 33 % und einen Biege-Elastizitätsmodul von weniger als 200 MPa aufweisen.

**3.** Polymerzusammenfassung, umfassend

(A) von 1 bis 99 Gew.-% eines Buten-1-Copolymers nach Anspruch 1, und
(B) von 99 bis 1 Gew.-% einer anderen Polymerkomponente;
wobei sich die Prozente auf die Summe von (A) und (B) beziehen.

**4.** Polymerzusammensetzung nach Anspruch 3, wobei die Komponente (B) ein Olefin-(Co)polymer umfasst.

**5.** Polymerzusammensetzung nach Anspruch 3, wobei die Komponente (B) ein Ethylen mit einem (Co)polymer, ein Propylen mit einem (Co)polymer oder deren Gemische ist.

**6.** Herstellungsartikel, erhalten aus den Buten-1-Copolymeren oder Zusammensetzungen nach einem der vorangehenden Ansprüche.

**7.** Verfahren zur Herstellung der Buten-1-Copolymere nach Anspruch 1 oder 2, umfassend die Copolymerisation von Buten-1 mit:

a) von 1 bis 7 Mol-% Ethylen, und
b) von 3 bis 20 Mol-% Propylen;
bei Vorliegen eines stereospezifischen Ziegler-Natta-Katalysators, umfassend (A) eine feste Katalysatorkomponente, bestehend aus einer Ti-Verbindung und einer Elektronendonatorverbindung, die aus auf $MgCl_2$ geträgerten Phthalaten ausgewählt ist; (B) eine Alkylaluminiumverbindung und (C) eine externe Elektronendonatorverbindung der Formel $R_a^5R_b^6Si(OR^7)_c$, wobei a und b eine ganze Zahl von 0 bis 2 sind, c eine ganze Zahl von 1 bis 3 ist und die Summe (a+b+c) 4 ist; $R^5$, $R^6$ und $R^7$ Alkyl-, Cycloalkyl- oder Arylreste mit 1 bis 18 Kohlenstoffatom(en), gegebenenfalls mit Heteroatomen sind.

**8.** Verfahren nach Anspruch 7, wobei der externe Donator Dicyclopentyldimethoxysilan ist.

**9.** Verfahren nach Anspruch 7 oder 8, das in flüssigem Buten-1 durchgeführt wird.

**Revendications**

**1.** Copolymères de butène-1 contenant :

a) 1 à 7 % en mole d'unités dérivées de l'éthylène, et
b) 3 à 20 % en mole d'unités dérivées du propylène ;
lesdits copolymères présentant une distribution des poids moléculaires présentant un rapport $\overline{M}w\,/\overline{M}n$ inférieur ou égal à 4 et un rapport molaire (b)/(a) supérieur ou égal à 2,3 et présentant :

$$r_B r_y \leq 1$$

$$r_E r_X \leq 1,5$$

$$r_P r_Z \leq 2\ ;$$

$r_B r_Y$, $r_E r_X$, $r_P r_Z$ étant les produits des rapports de réactivité dans les spectres $^{13}$C-RMN à 100,61 MHz, dans du 1,1,2,2-tétrachloroéthane dideutéré à 120˚C.

**2.** Copolymères de butène-1 selon la revendication 1, présentant une cristallinité aux rayons X supérieure à 33% et un module de flexion élastique inférieur à 200 MPa.

**3.** Composition de polymères comprenant

(A) 1 à 99 % en poids d'un copolymère de butène-1 selon la revendication 1 et

(B) 99% à 1% en poids d'un autre composant polymère ;

lesdits pourcentages se référant à la somme de (A) et (B).

4. Composition de polymères selon la revendication 3, le composant (B) comprenant un (co)polymère oléfinique.

5. Composition de polymères selon la revendication 3, le composant (B) étant un (co)polymère contenant de l'éthylène, un (co)polymère contenant du propylène ou leurs mélanges.

6. Objets confectionnés obtenus à partir des copolymères de butène-1 ou des compositions selon l'une quelconque des revendications précédentes.

7. Procédé pour la préparation de copolymères de butène-1 selon la revendication 1 ou 2, comprenant la copolymérisation de butène-1 avec :

a) 1 à 7 % en mole d'éthylène et

b) 3 à 20 % en mole de propylène ;

en présence d'un catalyseur stéréospécifique de Ziegler-Natta comprenant (A) un composant catalytique solide comprenant un composé de Ti et un composé donneur d'électrons choisi parmi les phtalates, supporté sur $MgCl_2$ ; (B) un composé d'alkylaluminium et (C) un composé donneur d'électrons externe de formule $R_a^5R_b^6Si(OR^7)_c$, où a et b représentent des entiers de 0 à 2, c représente un entier de 1 à 3 et la somme (a+b+c) vaut 4 ; $R^5$, $R^6$ et $R^7$ représentent des radicaux alkyle, cycloalkyle ou aryle comprenant 1-18 atomes de carbone contenant éventuellement des hétéroatomes.

8. Procédé selon la revendication 7, le donneur externe étant le dicyclopentyldiméthoxysilane.

9. Procédé selon la revendication 7 ou 8 réalisé dans du butène-1 liquide.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4943615 A
- EP 0135358 A
- US 4309522 A
- US P4298718 A
- US P4495338 A
- US 4220554 A
- US P4399054 A

- US P4469648 A
- EP 395083 A
- EP 553805 A
- EP 553806 A
- EP 601525 A
- WO 9844001 A
- WO 04000895 A

**Non-patent literature cited in the description**

- **J.C. RANDAL.** *Macromol. Chem Phys.,* 1989, vol. C29, 201
- **M. KAKUGO ; Y. NAITO ; K. MIZUNUMA ; T. MIYATAKE.** *Macromolecules,* 1982, vol. 15, 1150

- **H.N. CHENG.** *Journal of Polymer Science, Polymer Physics Edition,* 1983, vol. 21, 57
- **C.J. CARMAN ; R.A. HARRINGTON ; C.E. WILKES.** *Macromolecules,* 1977, vol. 10, 536